# EUROPEAN PATENT APPLICATION

(11) **EP 2 977 890 A1**
(43) Date of publication of application: **27.01.2016**
(21) Application number: 15177349.6
(22) Date of filing: 17.07.2015
(51) Int. Cl.: G06F 9/44, G06F 17/24

(54) **MULTI-FORMAT EDITORS**

(30) Priority: 21.07.2014 GB 201412927
(71) Applicant: Aptitude Software Limited, Fleet, Hampshire GU51 2QJ (GB)
(72) Inventor: THOMSON, Neil, Inverness, Highland IV63 6TJ (GB); PUSZ, Grzegorz, 51-506 Wroclaw (PL); MLYNARCZYK, Sebastian Oktawiusz, 54-032 Wroclaw (PL)
(74) Representative: Asquith, Julian Peter

(57) **Abstract**

A multi-format editor is provided for creating a software application, said editor being suitable for running on a computing device having at least a processor, a memory, a display device and an input device, and said editor comprising:
a graphical editor for:
retrieving from said memory and displaying on said display device a number of graphical elements; and
enabling a user to select and arrange at least some of said graphical elements on said display device using said input device so as to form a graphical representation of a process to be performed by said software application; and
a textual editor for displaying on said display device a textual representation of computer instructions describing a process to be performed by said software application, and enabling said user to edit said textual representation;
wherein said processor is arranged to automatically maintain said graphical and textual representations synchronised following amendment of said graphical representation in said graphical editor or amendment of said textual representation in said textual editor.

## Description

### FIELD OF THE INVENTION

The invention relates to improvements in editors for creating software applications.

### BACKGROUND OF THE INVENTION

The present specification describes features which build on the applicant's earlier Microgen Aptitude products. For example features of Microgen Aptitude are described in the following US patent applications and issued patents, the content of which are incorporated herein by reference: US-2006-0247805-A1 issued as US 8,392,013; US-2011-0161941-A1 issued as US 8,464,229; US-2011-0161733-A1 issued as US 8,140,894; US-2011-0161916-A1 issued as US 8,438,534; US-2011-0161917-A1; US-2011-0161918-A1; US-2011-0161946-A1 issued as US 8,549,353; US-2011-0161886-A1; US-2011-0161371-A1; US-2012-0059863-A1 issued as US 8,392,473; and US-2013-0205275-A1.

It should be understood that the invention and the embodiments described below may incorporate features of any earlier Microgen Aptitude product, and any of the features described in the applications mentioned above.

Aptitude is a program with a graphical interface which allows users to create complex applications without knowledge of traditional programming languages. Graphical elements, also referred to as icons, can be connected together using graphical links in order to create graphical models of processes and rules which are later converted into computer instructions. The graphical models can be complex or composite, as they may contain many graphical elements.

Conventionally, computer programs are written in a programming language such as Cobol, Pascal, C++ or Java. The programs so produced consist of a set of files containing "source code" which is simply text written using the lexicon and obeying the syntax of the language. The source code is then compiled or translated into machine code and executed. The development environment for producing, managing and compiling these programs is called an "IDE" or Integrated Development Environment; "Integrated" because it normally comprises a set of tools such as compilers, linkers, debuggers, etc.

Microgen Aptitude comprises a graphical editor. The graphical models that are produced are diagrams comprising graphical elements (icons), and may for example represent processes and rules used in the Aptitude software. The graphical models that are produced may be combined and translated into intermediate code or "p-code", which is not human readable but is interpreted by an execution engine, so automating the business model.

### SUMMARY OF THE INVENTION

The invention provides a multi-format editor, method and computer-readable medium as set out in the accompanying claims.

Embodiments of the invention will now be more particularly described, by way of example only, with reference to the accompanying figures.

### BRIEF DESCRIPTION OF THE FIGURES

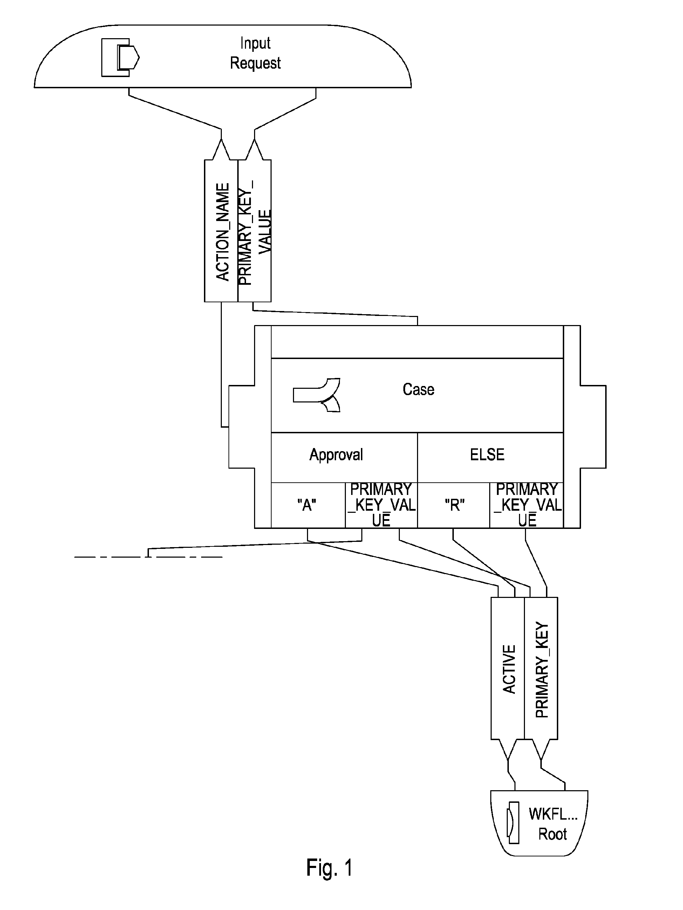

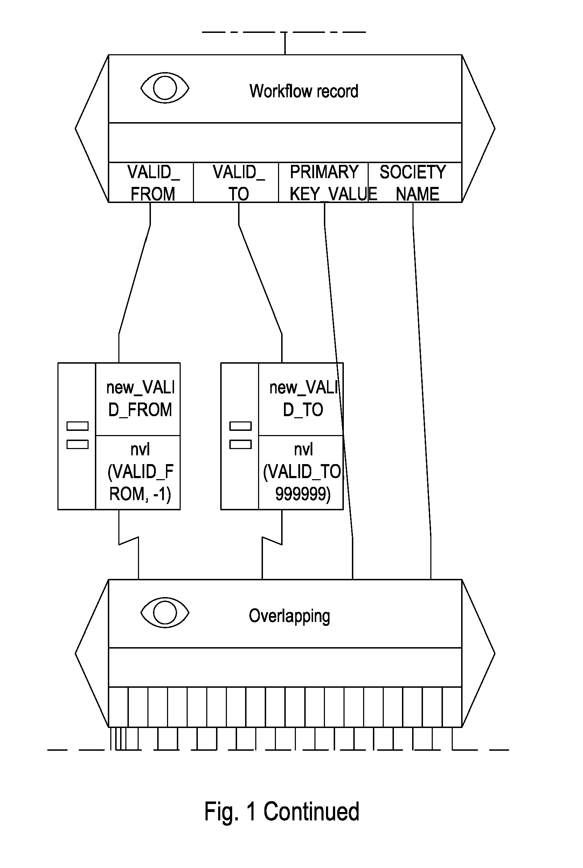

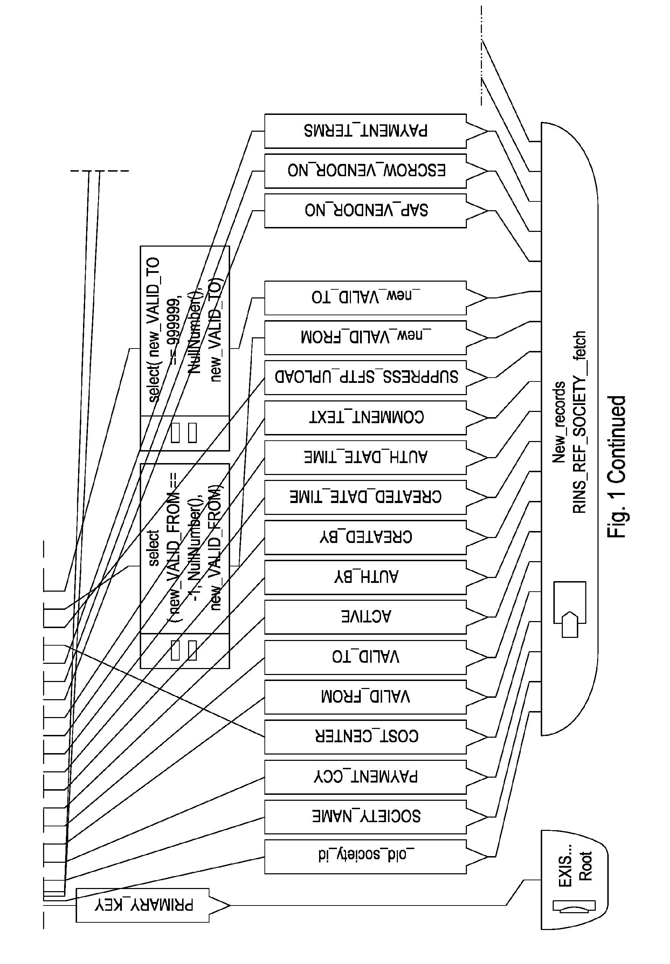

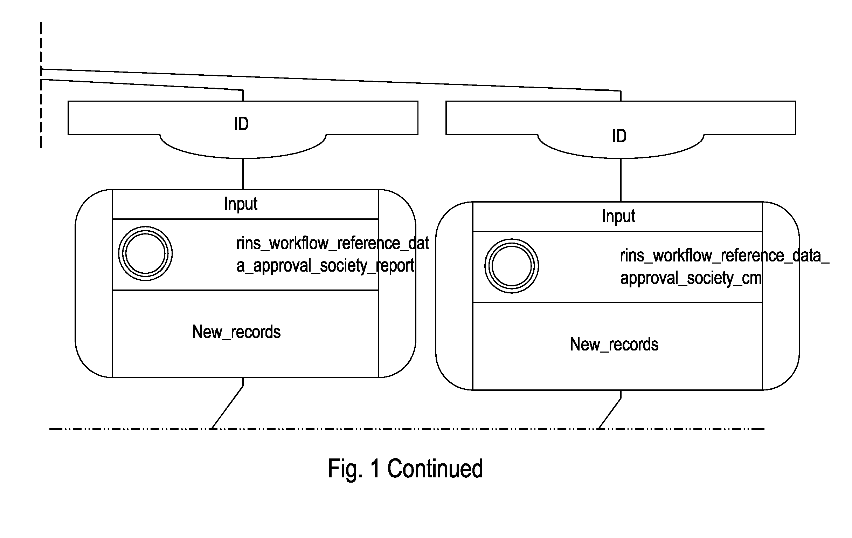

Figure 1 shows an example of a real life rule used in Microgen Aptitude;
Figure 2 shows an example of a screenshot from an Adaptive Editor;
Figure 3 shows an example of code generation in the Adaptive Editor of Figure 2;
Figure 4 shows an example of code generation in the Adaptive Editor;
Figure 5 illustrates the generation of a code block corresponding to unrecognized code in the Adaptive Editor;
Figure 6 shows the use of an abstract region organising the code in the graphical representation of the Adaptive Editor;
Figure 7 shows a computing device, which may for example be a personal computer (PC), suitable for implementing the Adaptive Editor, and on which methods described herein can be carried out.
Figure 8 shows a Business Object which provides the format of input data used in an example rule;
Figure 9 shows a rules editor;
Figure 10 shows the rules editor in operation;
Figure 11 shows how the user may enter formulae in the spreadsheet editor;
Figure 12 shows a drag and drop operation from the spreadsheet editor to the graphical editor;
Figure 13 shows the renaming of cells, icons and sheets;
Figure 14 shows the use of specialised "cell regions" containing formulas where each type of region has its own particular format;
Figure 15 shows a LOOP region, which can be used for iterations;
Figure 16 shows a TABLE region for tables of values entered by the user manually into the spreadsheet;
Figure 17 shows a TABLE AS SELECT region for creating tables in runtime;
Figure 18 shows a TABLE AS REDUCE region for creating tables in runtime;
Figure 19 shows a FUNCTION region for defining reusable, parameterized portions of logic;
Figure 20 shows a CASE region for implementing routing functionality;
Figure 21 shows an INSERT INTO region, to populate a Rule's outputs;
Figure 22 shows the use of an Accumulate statement; and
Figure 23 shows an Enterprise Rules Debugger.

### DESCRIPTION OF PREFERRED EMBODIMENTS

Each feature disclosed or illustrated in the present specification may be incorporated in the invention, whether alone or in any appropriate combination with any other feature disclosed or illustrated herein.

Aptitude is sometimes criticized for a lack of clarity about who is the target audience for some of its tools. In particular, while the Business Rules were originally designed for business users, the demands for increased functionality and performance have caused them to become more technical.

Another criticism has been that strict adherence to a graphical and data flow interface has caused problems implementing some seemingly simple pieces of functionality and the transparency of the rules is lost. Some rules could be implemented in a simpler and clearer manner using a textual/control flow approach.

We propose the addition of control flow functionality and the use of "Adaptive Editors".

Pictures are easier to deal with for those with limited experience of programming code. Pictures also assist in the understanding of code generated by others. Pictures are "self-documenting", and allow a user to shape an algorithm before going into the details of the algorithm. However, drawings can also be slower to use for programmers who are used to working with text.

On the other hand, programmers like to work with text editors, because these allow a fast and efficient workflow for programmers who have a substantial body of knowledge relating to programming. Over the last decade code editors have evolved to deliver higher productivity through various additional features in the code editor, such as automatic syntax highlighting, automatic code analysis help, and code snippets/templates.

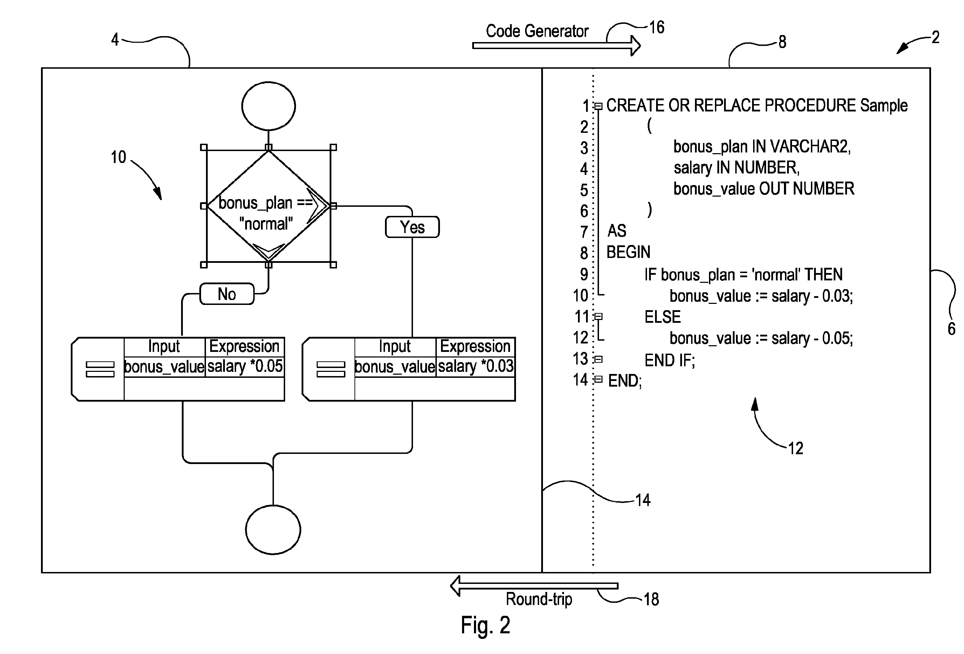

In order to deal with these different requirements, the applicant has developed an Integrated Development Environment which we refer to as an "Adaptive Editor". An example of a screenshot from an Adaptive Editor is shown in Figure 2.

Figure 2 shows an Adaptive Editor 2 in which a graphical editor 4 is shown on the left and a text editor 6 is shown simultaneously on the right. In the example of Figure 2, the left hand side of a window 8 on a display device shows a graphical representation 10 of a rule for calculating a salary bonus, and the right hand side of the window 8 shows a textual representation 12 of code which describes the same rule.

The window 8 contains a divider bar 14, which divides the window 8 into the graphical representation 10 and the textual representation 12. The user may change the position of the divider bar 14, for example by dragging it to the left or right, in order to change the proportion of the window 8 used to display the graphical representation 10 or the textual representation 12.

In the Adaptive Editor 2 of Figure 2, the graphical representation 10 and the textual representation 12 are automatically maintained in synchronisation with each other. This means that any changes made by a user to the graphical representation 10 in the graphical editor 4 are automatically and immediately reflected in corresponding changes in the textual representation 12 in the text editor 6, and vice versa. In Figure 2 this is represented by a code generator arrow 16, which indicates the operation of a code generator which automatically generates code in the text editor 6 corresponding to changes made in the graphical representation 10, and by a round trip arrow 18, which indicates that changes made in the text editor 6 are automatically reflected in the corresponding graphical representation 10.

The Adaptive Editor 2 of Figure 2 can be used for a wide range of different graphical and textual representations. The graphical representation 10 may be a graphical representation, for example, of any of the following:
Aptitude Control Flow, Rules and Microflows
Web Application Control Flow
SQL Procedure
SQL Rule
WYSIWYG Form Designer

The text editor 6 may be used, for example, with any of the following languages:
Japti (Microgen's own language)
Java
Database Stored Procedure
SQL statements
Form Layouts

The left and right positions of the graphical and text editors 4 and 6 can be swapped by the user if necessary. For example, a user focusing primarily on the text editor 6 may prefer to position this on the left side of the window 8, with the graphical editor 4 on the right.

It will be appreciated that the Adaptive Editor 2 allows great flexibility. For example a business analyst, having no knowledge of programming code, can remove the text editor 6 from the window 8 (for example by dragging the divider bar 14 completely to one side of the window 8), thus allowing the business analyst to work exclusively on the graphical representation 10. A consultant may prefer to work with both the graphical and text editors 4 and 6 at the same time. A programmer may choose to position the text editor 6 on the left of window 8, and to make the text editor 6 larger than the graphical editor 4.

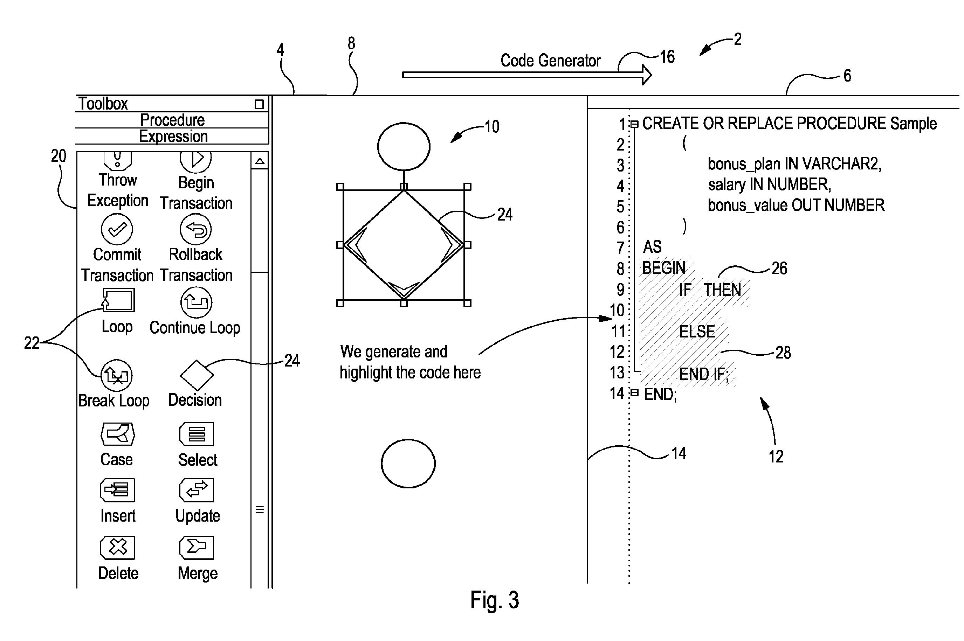

Figure 3 shows an example of code generation in the Adaptive Editor 2. Figure 3 shows the upper part of window 8, and the graphical editor 4 is provided with a palette 20 of icons 22 which the user can drag and drop onto the graphical representation 10. Figure 3 shows that when decision icon 24 is placed into the graphical representation 10 a corresponding block 26 of code is automatically generated in the textual representation 12, and the block 26 of code is automatically highlighted, for example using background highlighting 28 as shown in Figure 3.

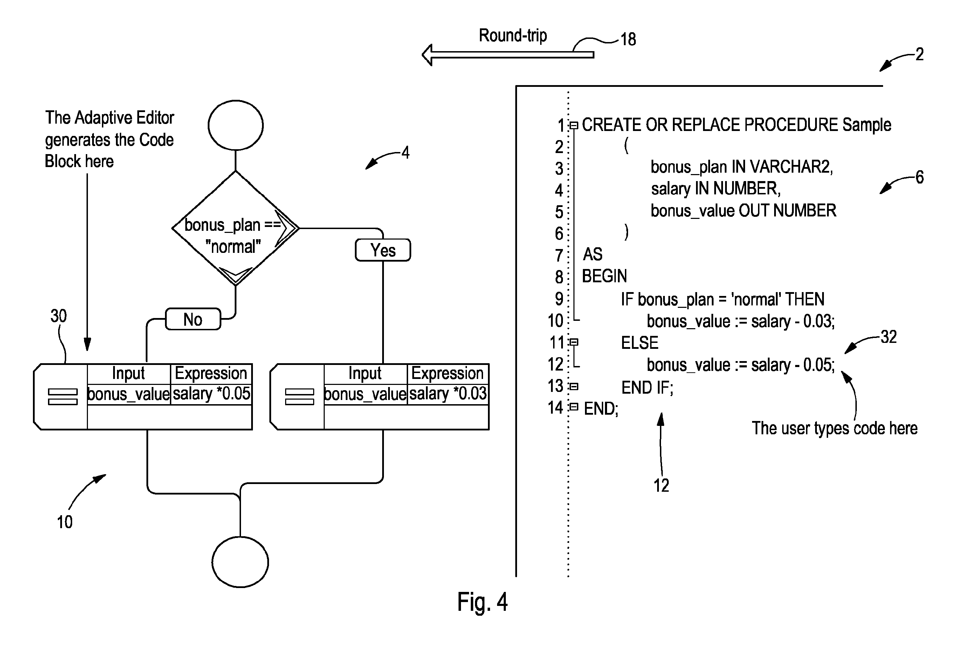

Figure 4 shows an example of code generation in the Adaptive Editor 2. Figure 4 illustrates how a code block 30 is automatically generated in a graphical representation 10 in the graphical editor 4 when a user types some code 32 in the textual representation 12 in the text editor 6.

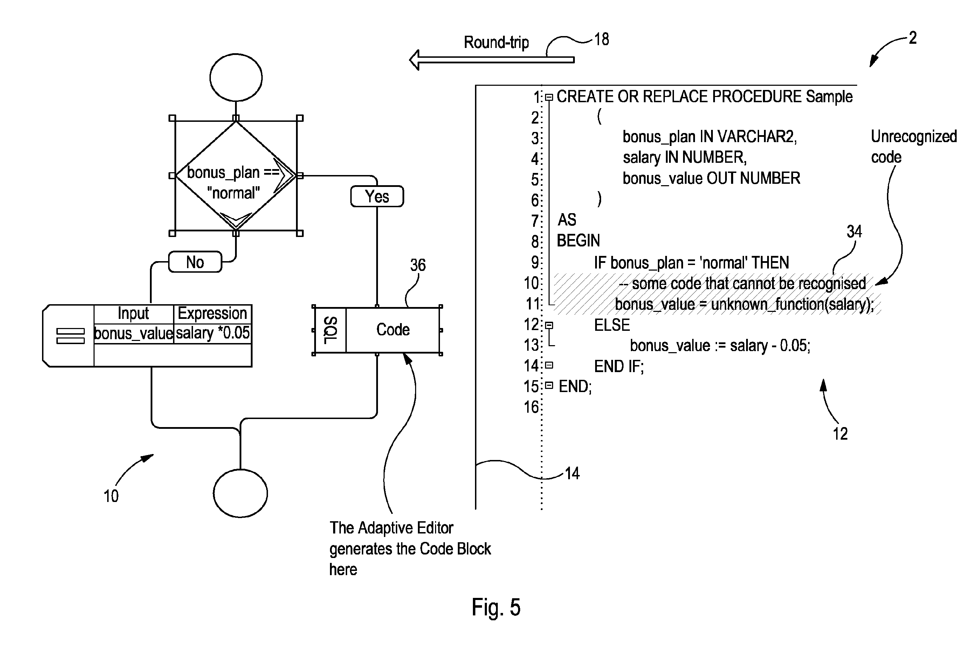

Figure 5 illustrates the generation of a code block corresponding to unrecognized code in the Adaptive Editor 2. In Figure 5 a user types some unrecognized code 34 into the textual representation 12, and the Adaptive Editor 2 automatically creates a code block 36 containing the unrecognized code. The user can click on the code block 36 and the unrecognized code 34 is then highlighted in the textual representation 12.

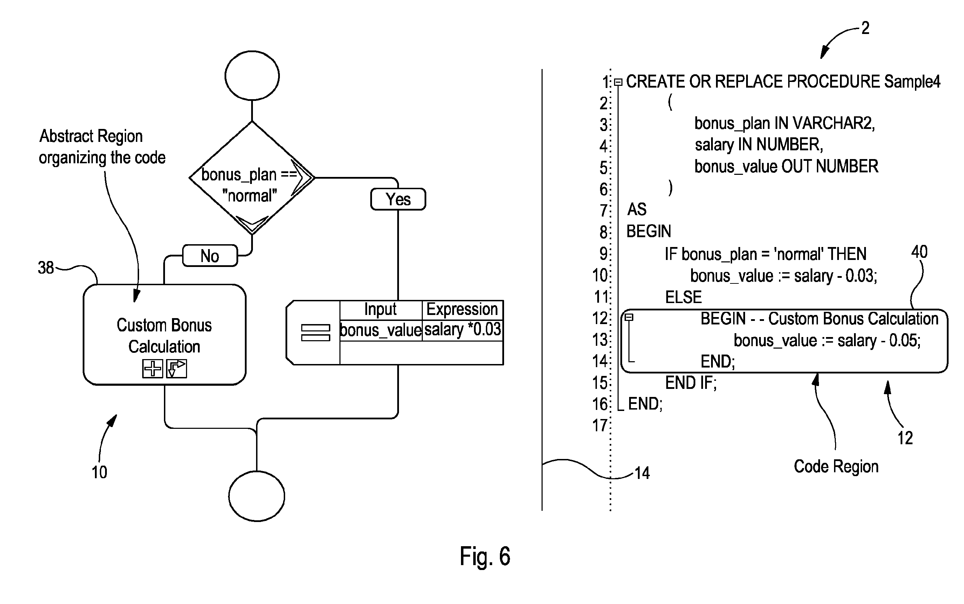

Figure 6 shows the use of an abstract region 38 organising the code in the graphical representation 10 of the Adaptive Editor 2. The abstract region 38 corresponds to a code region 40 in the textual representation 12. The Abstract Region (or Code Region) 38 represents code that the user does not want to convert into blocks in the graphical representation 10. This functionality helps to maintain the legibility of the diagram in the graphical representation 10 by controlling the number of the visible details. We assume that the diagram represents an algorithm and some details may be irrelevant for its analysis. The user can click on the Abstract Region 38 in order to expand the details of the corresponding code. The Abstract Region 38 is different from a Code Block 30 (see Fig 4), and it represents code that can be converted to code blocks but the user has decided not to do so.

It will therefore be appreciated that the Adaptive Editor 2 provides diagrams which increase the productivity of business users and consultants, whilst at the same time providing a code interface which increases the productivity of programmers.

The code/text editor 6 is provided with all of the development tools which are present in modern code/text editors. The code/text editor 6 is preferably also constrained always to generate a valid diagram in the graphical representation 10. This ensures that it is not possible for a programmer, working in the code/text editor 6, to produce an invalid diagram in the graphical representation 10.

The graphical representation 10 is preferably always maintained in sync with the textual representation 12. Alternatively, the graphical representation 10 may be automatically generated whenever the textual representation 12 is saved by a user.

The Adaptive Editor 2 is a multi-format editor in the sense that it allows editing of both graphical and textual formats.

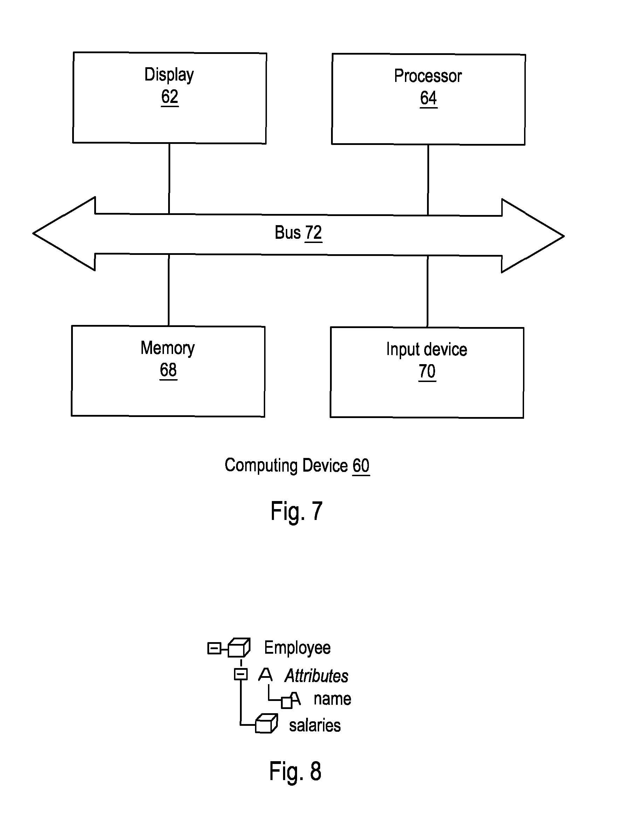

Figure 7 shows a computing device 60, which may for example be a personal computer (PC), suitable for implementing the Adaptive Editor 2, and on which methods described herein can be carried out. The computing device 60 comprises a display 62 for displaying information, a processor 64, a memory 68 and an input device 70 for allowing information to be input to the computing device. The input device 70 may for example include a connection to other computers or to computer readable media, and may also include a mouse or keyboard for allowing a user to enter information. These elements are connected by a bus 72 via which information is exchanged between the components.

The Business Rules in Microgen Aptitude are probably the most criticized area where strict adherence to the graphic/data flow model has led to some loss of transparency and criticism by IT professionals.

We will now describe what we refer to as a rules editor which employs the Adaptive Editor methodology and exploits the wide-spread knowledge of spreadsheets such as Microsoft Excel.

We consider an example rule to demonstrate the rules editor.

### Example Rule

In the example rule we want to implement the following calculation:
1. At the end of the year, we calculate an employee's average salary.
2. If the average is lower than £1200, the employee receives a 2% rise in January.
3. Additionally, 22% of the salary is calculated as the employee's tax value for January.

The format of the input data is shown in the form of a Microgen Aptitude Business Object in Figure 8. It comprises the employee's name and a collection of salaries for that employee.

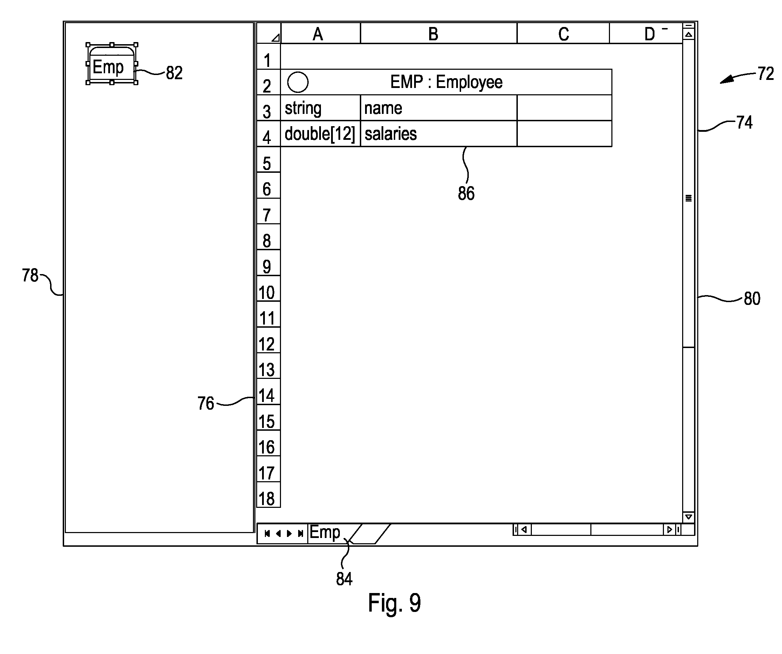

Figure 9 shows a new rules editor 72 which comprises a window 74 divided by a movable vertical divider bar 76 into a graphical editor 78 on the left and a spreadsheet editor 80 containing a spreadsheet on the right. The spreadsheet editor 80 is divided into cells arranged in columns referenced by letters at the top and in rows referenced by numbers along the left side, as shown in Figure 9.

As shown in Figure 9, when a user places an employee icon 82 in the graphical editor 78 a corresponding employee sheet 84 is automatically created in the spreadsheet editor 80. The employee sheet 84 contains a table 86 containing the data contained in the Business Object of Figure 8.

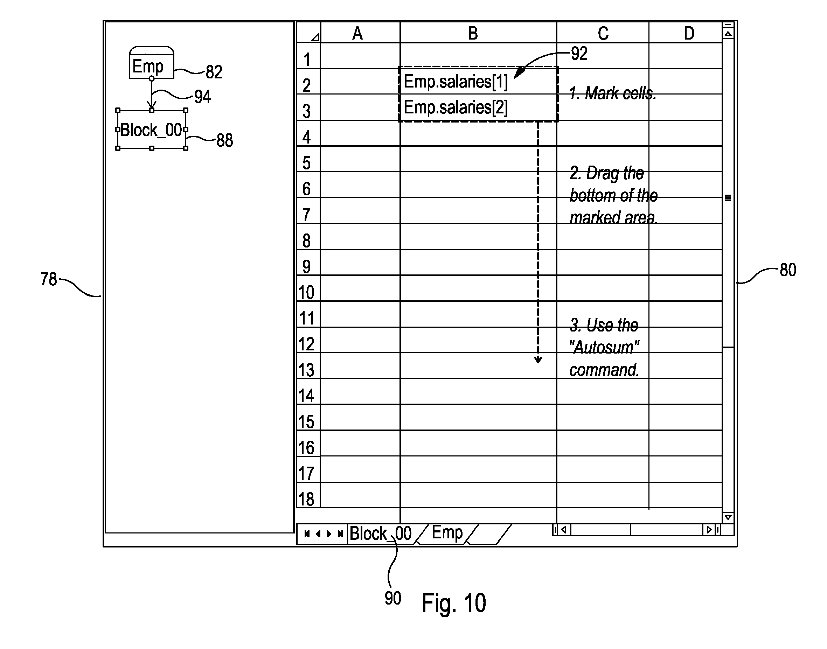

Referring to Figure 10, when the user adds a new block icon 88 (named Block_00) to the graphical editor 78, a new second sheet 90 is added to the spreadsheet editor 80. When the new sheet 90 is populated with data from the employee icon 82 (in this case employee salaries 92) a link 94 is automatically drawn between the employee icon 82 and block icon 88.

A user can type, for example "1" and "2", into two cells, then select those cells and expand the selection downwards and the editor will generate a sequence of eg "1,2,3,4, 5...". The spreadsheet editor 80 will also recognize a pattern, eg "=... [*]", and populate the expanded selection with eg "=...[3]", "=...[4]", "=...[5]" ... "=...[12]".

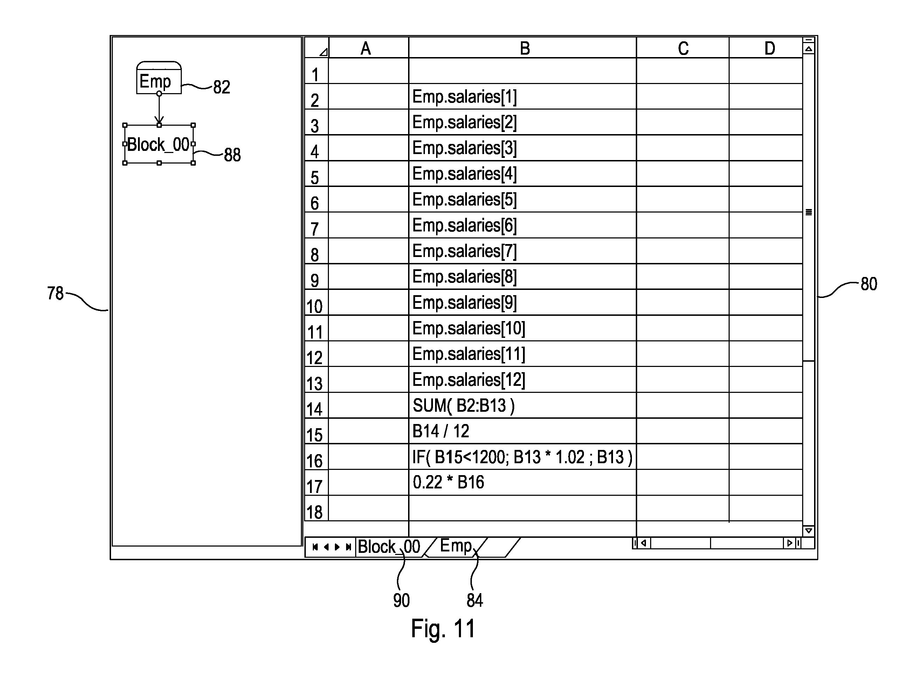

Figure 11 shows how the user may enter formulae in the spreadsheet editor 80 so that the sum of salaries is calculated in cell B14, the average salary is calculated in cell B15, the new salary is calculated in cell B16 depending on whether the average salary exceeds 1200, and the employee's tax is calculated in cell B17. These formulae are also implemented in the corresponding block icon 88.

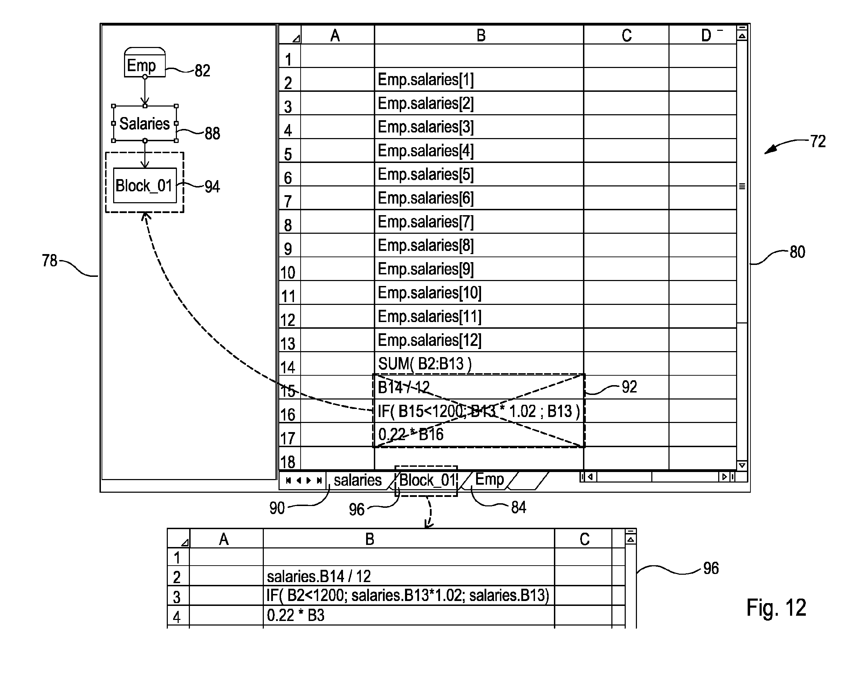

In Figure 12 it should first be noted that the second sheet 90 and block icon 88 have both been renamed "salaries", thus becoming a salaries sheet 90 and a salaries icon 88. In the new rules editor 72 this is an automatic process where if a user renames a sheet the corresponding icon is automatically renamed, and vice versa.

In Figure 12 the user has made a selection 92 of three formulae in cells B15 to B17 in the salaries sheet 90, and has dragged and dropped this selection 92 into the graphical editor 78. As a result a new block icon 94 (named Block_01) is automatically created in the graphical editor 78, and a corresponding new sheet 90 (also named Block_01) is created in the spreadsheet editor 80.

The top part of new sheet 96 is shown in Figure 12, from which it can be seen that cells B2 to B4 contain the three formulae which were dragged and dropped into the graphical editor 78, and in these cells references to other cells are automatically updated to refer to cells in the salaries sheet 90 where necessary. For example, in cell B2 of new sheet 96 the reference to cell B14 is automatically replaced by "salaries.B14" indicating that this refers to a cell in the salaries sheet 90.

The dragging and dropping of cells from the spreadsheet editor 80 into the graphical editor 78 results in the transformation of a range of spreadsheet cells into a new block. This is a reversible operation - i.e. the user can pick a block and drag & drop it from the graphical editor 78 onto a spreadsheet in the spreadsheet editor 80. In this case the dragged block (and its corresponding sheet) are removed, and the formulae contained in the block are placed into the spreadsheet on which the block is dropped.

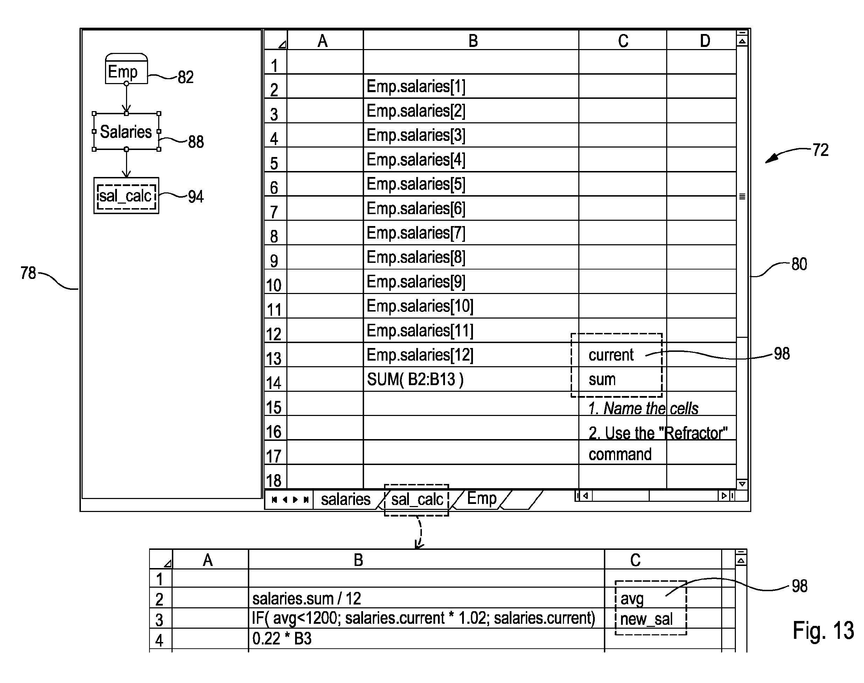

Figure 13 shows how cells can be given names 98. In this example cells B13 and B14 are named "current" and "sum" respectively. The spreadsheet editor 80 allows a user to select the named cells, right click, and then select a "Refactor" command. When the user clicks on "Refactor" the spreadsheet editor 80 automatically finds all formulae that refer to cells B13 and B14 and replaces all references to B13 and B14 in these formulae by references to the names "current" and "sum" respectively.

In Figure 13 the new block icon 94 and the new sheet 90 have both been renamed "sal_calc".

The sheets 84, 90 and 96 described above are spreadsheets, in which the user can make changes. However, the user does not have to start with the spreadsheet editor 80. The user can start with the graphical editor 78, for example making changes to the blocks first and filling in the spreadsheets later. Changes made in the spreadsheet editor 80 are automatically made in the graphical editor 78, and vice versa.

The complexity of block diagrams in the graphical editor 78 is determined by the user and all the links between blocks / icons are drawn automatically

In the block diagrams of the graphical editor there are no thick links (ie all links between blocks / icons are the same), nested rules, hierarchical data handling or profusions of linkages.

Formerly, a lot of the specification was within the blocks and presented as dialogs which differed between blocks. It is now presented explicitly.

The Enterprise Business Rules are translated to Japti and consequently can call any services including Control Flows, Hierarchy Transformations, Targets, Reference Objects etc. The new rules editor may be provided with a spreadsheet debugger, which may be based on the Japti debugger.

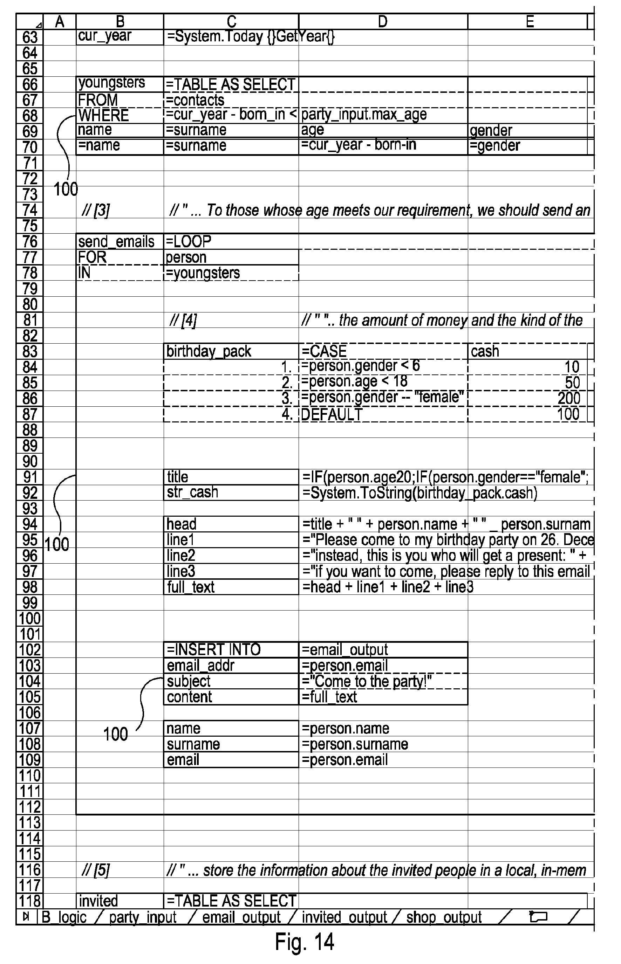

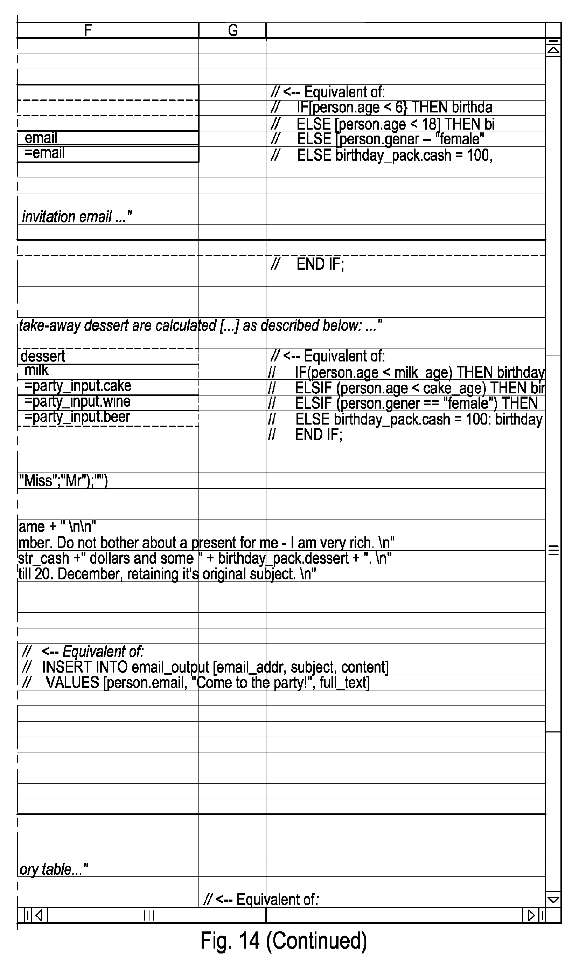

Spreadsheets are sometimes unable to provide all the functionality needed, and to overcome this we extend the spreadsheet paradigm or applications such as Microsoft Excel (RTM) as follows:
1. A single cell value can be of a complex data type - in particular, these types can contain collections of values or hierarchical data.
2. We add our own, complex formulas (with our own syntax) to express programming constructs not available in applications such as Microsoft Excel (RTM), such as routing, iteration, aggregation for example. These formulas are not represented in a textual form. Instead, as shown in Figure 14, we use "cell regions" 100, where each type of region 100 has its own particular format (such as colour, cell layout, cell borders etc) to express clearly the functionality the region 100 stands for. In some cases a single region can embed other regions.
3. A single cell, containing for example data or a formula, can have a name, but in the new Rules Editor this name is displayed in one of the neighbouring cells, so it can be seen at a glance.

The rules editor 72 uses the following types of cell regions in the spreadsheet used in spreadsheet editor 80:

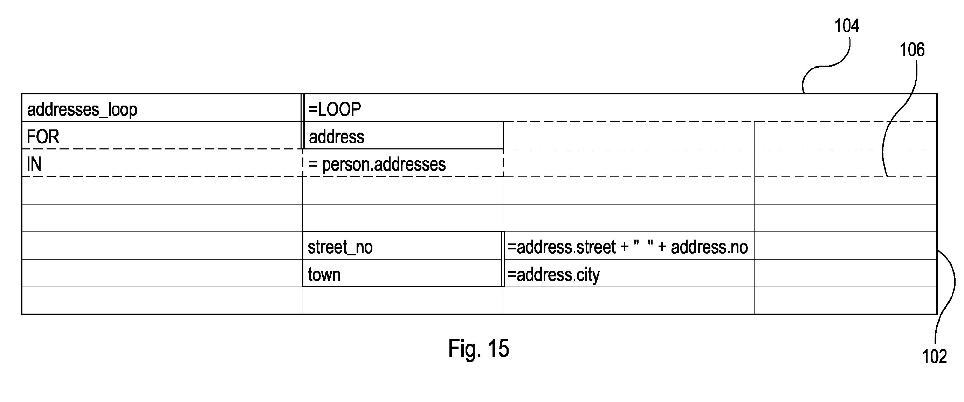

Figure 15 shows a LOOP region 102, which can be used for iterations. The LOOP region 102 is defined by a border 104, which is thicker than the cell division lines 106 and which extends around the LOOP region 102. The details of the loop execution control are placed in sub-region 106.

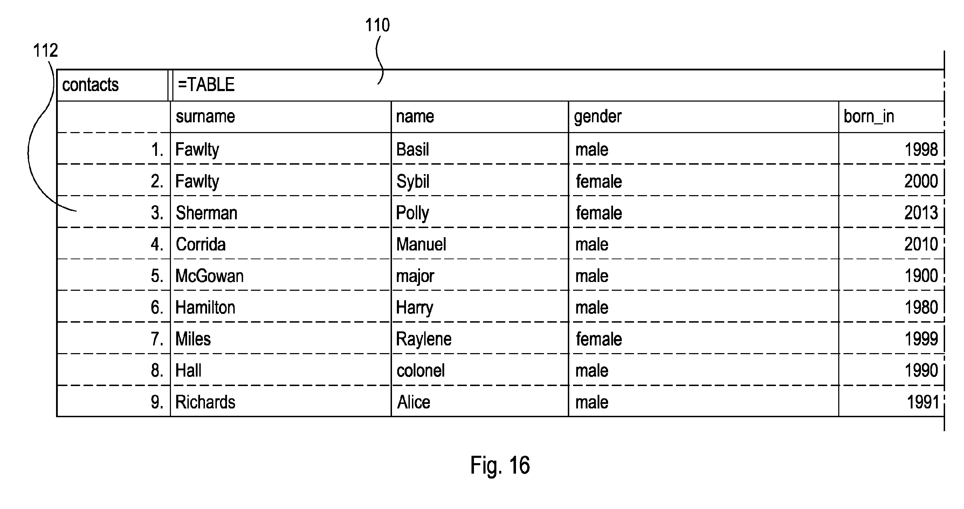

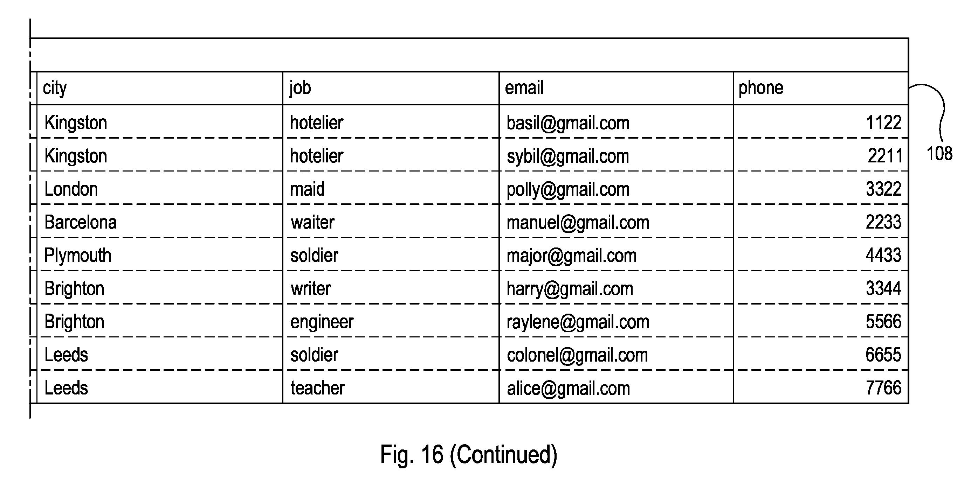

Figure 16 shows a TABLE region 108 for tables of values entered by the user manually into the spreadsheet, where a single cell can contain data, a formula or a nested TABLE region. The TABLE region 108 is defined by border regions 110 and 112 which extend along the top and left edges of the region 108 respectively, and which are provided with a distinctive visual appearance, such as being shaded in a distinctive colour.

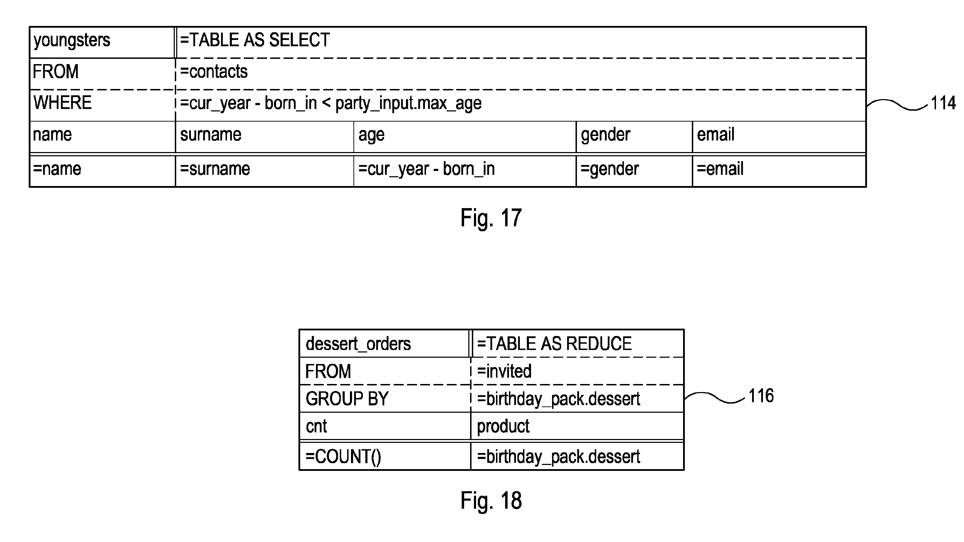

Figure 17 shows a TABLE AS SELECT region 114 for creating tables in runtime, being the result of loading, filtering and/or reformatting data from external sources (including e.g. databases) or other TABLE regions, or " TABLE AS ..." regions, or simply cells that hold collections.
Figure 18 shows a TABLE AS REDUCE region 116 for creating tables in runtime, being the result of loading, filtering and/or reformatting data in addition to grouping and aggregating data.

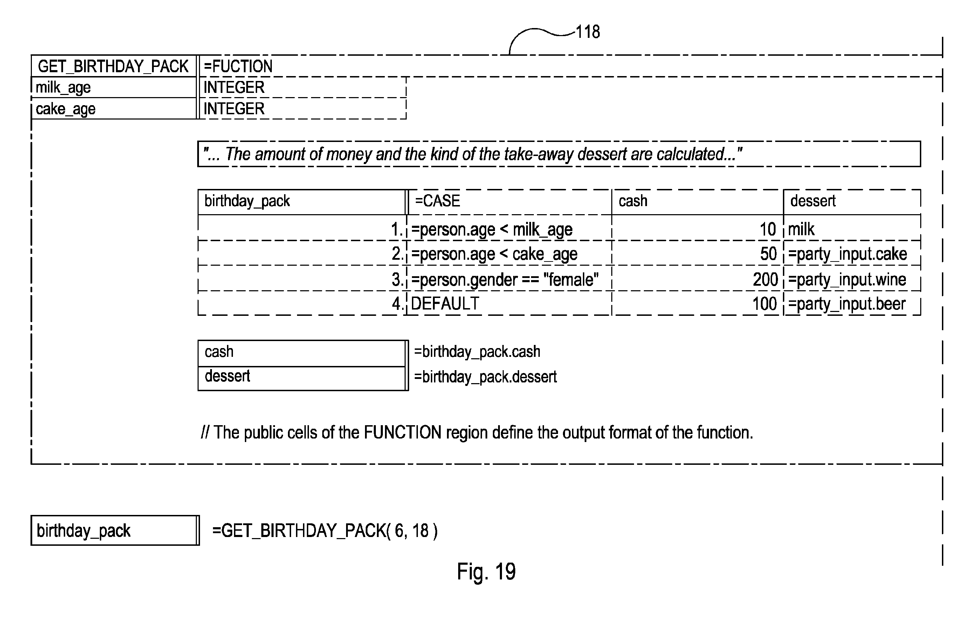

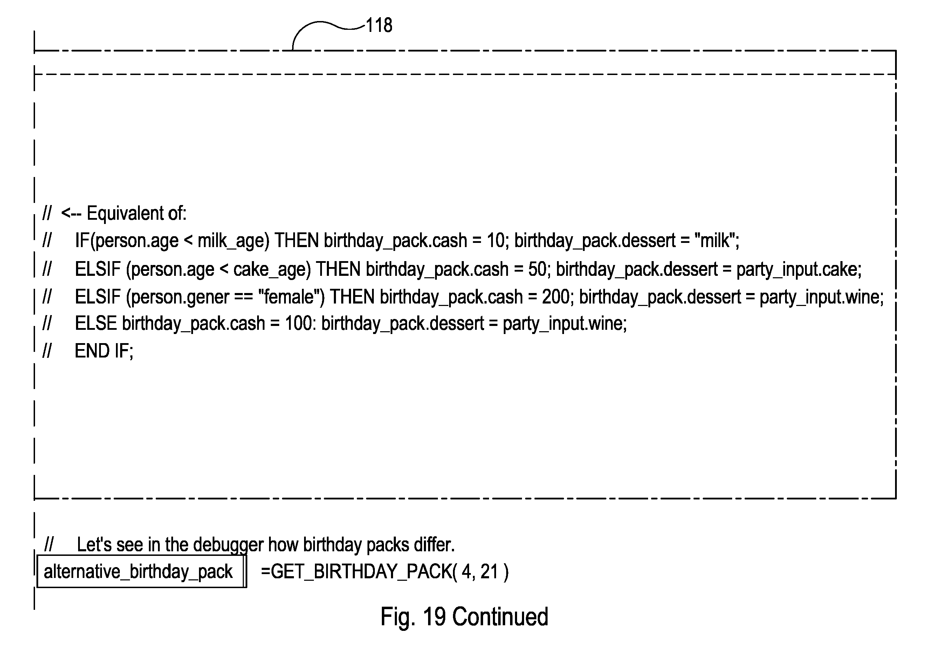

Figure 19 shows a FUNCTION region 118 for defining reusable, parameterized portions of logic.

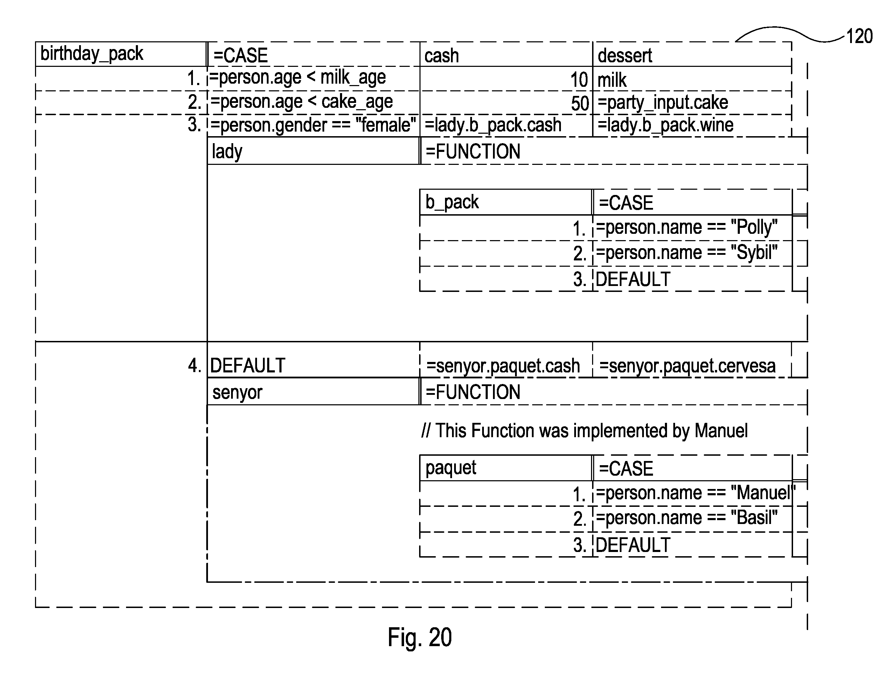

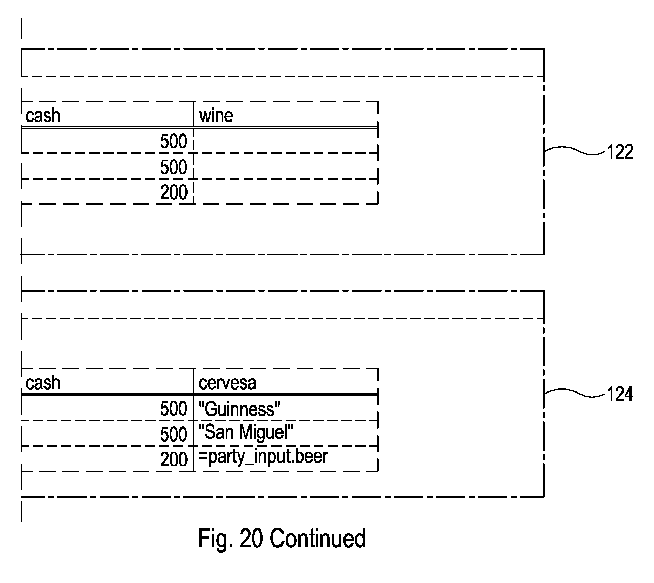

Figure 20 shows a CASE region 120, which can, but does not have to, include or "dock" FUNCTION regions to implement the routing functionality of different cases. In the example shown in Figure 20 there are four different cases, and the CASE region 120 contains two FUNCTION regions 122 and 124.

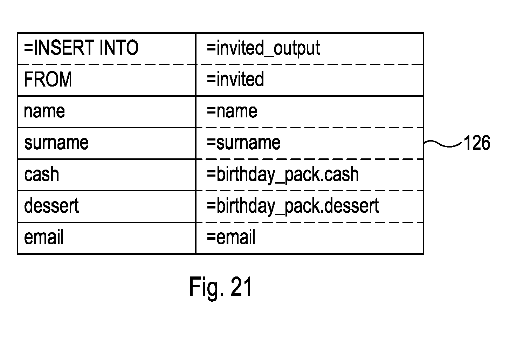

Figure 21 shows an INSERT INTO region 126, to populate a Rule's outputs (which are defined in output blocks).

In a simple version of the rules editor there are 5 kinds of blocks in the graphical Rule diagram in the graphical editor 78, which provides the graphical part of a rule definition, as follows:
1. input blocks - to define the Rule's inputs
2. output blocks - to define the Rule's outputs
3. documentary blocks - to keep documentation with references to the new Rules' blocks and locations in the spreadsheet.
4. spreadsheet blocks
5. library blocks, which are spreadsheets that can contain FUNCTION regions only.

Users of the Rules Editor can "elevate" some of the functionalities from cell regions 100 to the diagram level, so that they'll be available not only as cell regions 100, but also as specialized blocks. When a user selects one or a few cell regions and drags them to the diagram, a new block is created in the diagram, containing the selected cell region(s), and at the same time the selected cell regions are moved from their original sheet to a new sheet in the spreadsheet; this new sheet contains the selected cell regions and it corresponds to the newly created block in the diagram. This process can also be done by the user in the reverse direction i.e. it is possible to move the contents of a block in a graphical diagram to one of the existing sheets in the spreadsheets; in such a case the block is removed from the graphical diagram, the sheet describing block's contents is removed from the spreadsheet and the cell regions from the removed sheet are added to another sheet selected by the user. In this way, the user can control the number of blocks in the graphical diagram and the number of corresponding sheets in the spreadsheet, as a consequence modifying the complexity of operations defined in the blocks and sheets, selecting the abstraction level which is best suited to describe the particular processing algorithm. After moving the cell regions between the sheets, and blocks in the diagram, all references between the cells (from all sheets) and blocks in the diagram are refreshed (with a proper modification of their fully qualified names, which may contain the sheet name, cell region name and cell name) such that they point to the regions in the proper sheet or proper blocks in the diagram.

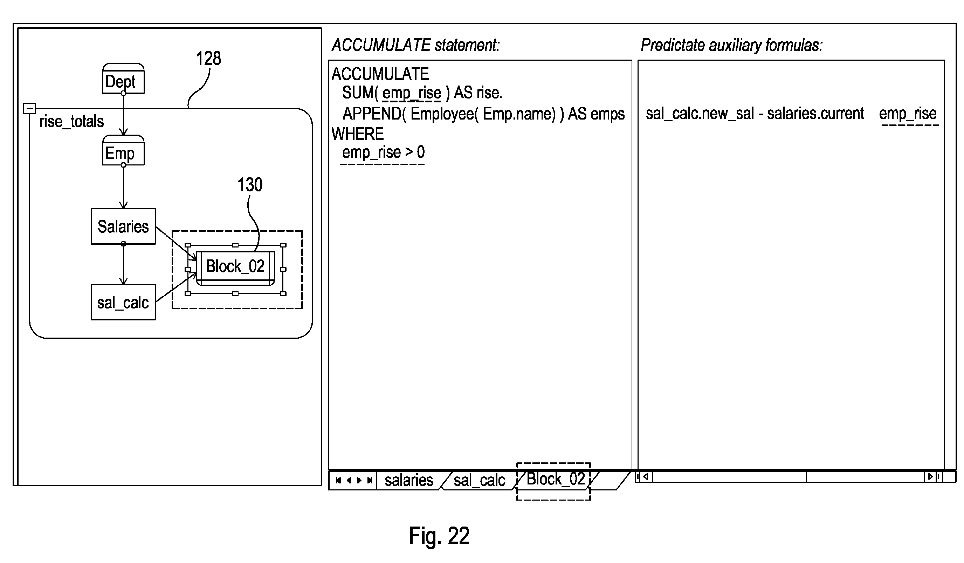

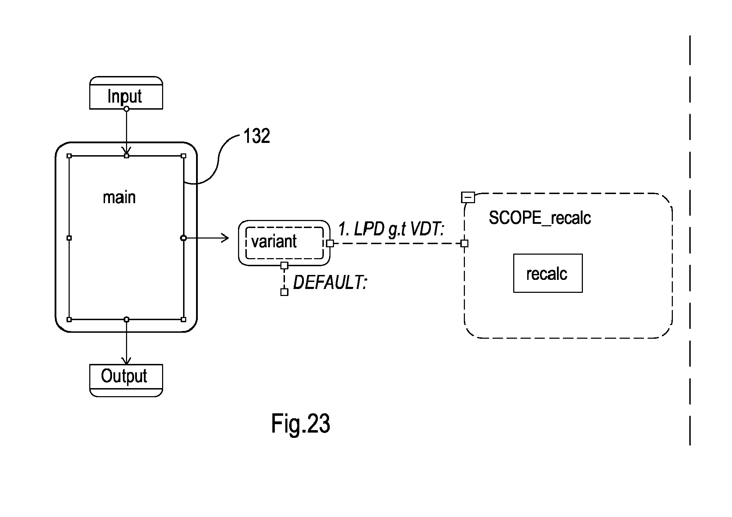

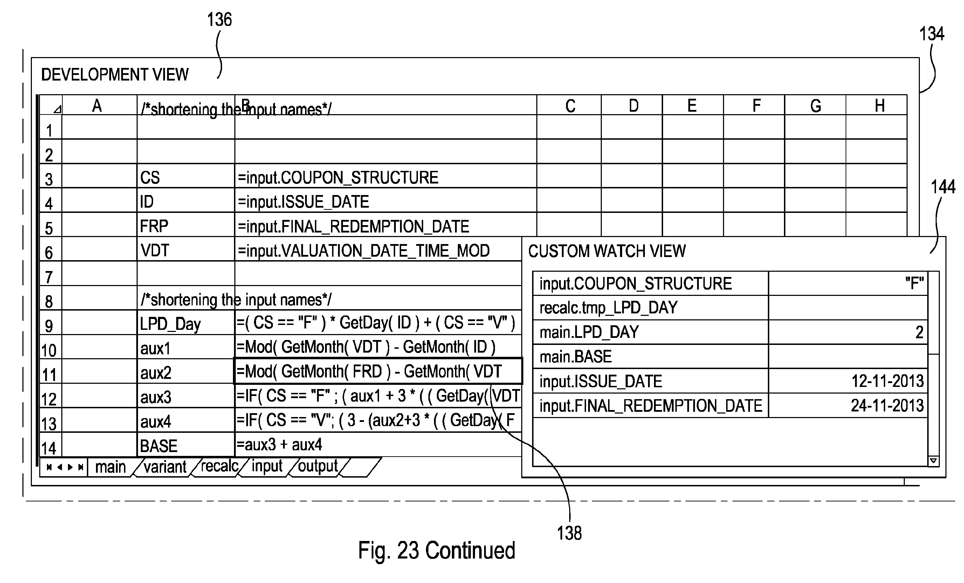

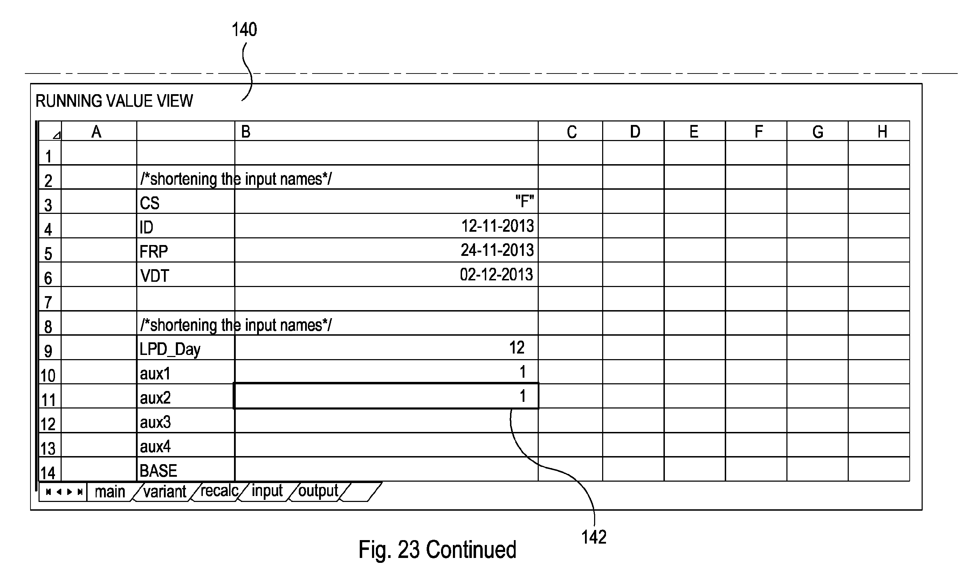

For example, those functionalities may include:
- iteration and reduction (accumulation), as shown in Figure 22 by the black collapsible frame 128 and the block 130 (named Block_02) respectively; and
- routing block 132 in Figure 23.

The above features of the rules editor provide the following functionality which is not present or difficult to achieve with conventional spreadsheets:
1. The creation and handling of collections: in Aptitude, this was handled by the Output Block of a child rule.
   An example is the "TABLE AS REDUCE" region 116 shown in Figure 18 and the "COLLECT" aggregation function
2. Iterations - especially iterations over collections the size of which is unknown at design time. In Aptitude these were handled by Reference Access Block and child Rules.
   An example is the "LOOP" region 102 shown in Figure 15.
3. Accumulation over iterations: in Aptitude, this was handled by the Reduction Block. An example is the "TABLE AS REDUCE" region 116 shown in Figure 18.
4. Conditional execution of a large portion of logic: in Aptitude, this was handled by the Case Block. In conventional spreadsheets such as Microsoft Excel (RTM), the users have only the "IF" function at their disposal, which means that if they want to execute many expressions (i.e. cells) under a single condition, they have to duplicate the "IF" function and the condition for each of the aforementioned expressions/cells.
   An example is the "CASE" region 120 shown in Figure 20.
5. Handling complex data structures: in Aptitude Rules, this was handled by hierarchical Data Objects and Complex Rules.
   These issues may be handled using the same Adaptive Rule approach of the Adaptive Editor described above, but where the right hand panel has the requisite functionality and syntax.

Figure 22 shows the use of an Accumulate statement. The black collapsible frame 128 shows that we apply the logic in that frame to every employee (represented by "Emp") within the department (represented by "Dept"). On the right hand-side, there are properties of the reduction/accumulation block 130.

Figure 23 shows an Enterprise Rules Debugger.
When debugging:
A DEVELOPMENT VIEW window 136 simply shows the spreadsheet (but in read-only mode). The current debugging step is highlighted by a red frame 138.
A RUNNING VALUE VIEW window 140 shows the spreadsheet, but what is displayed is the running values of the cells rather than the formulas. The current debugging step is highlighted by a red frame 142 too. Obviously, the current debugging step frames 138 and 142 from the two views are synchronized.
A CUSTOM WATCH VIEW window 144 shows a selection of values chosen by a user. When debugging, the user often wants to monitor some selection of values only, which can be located in distant places, in various spreadsheets. In the CUSTOM WATCH VIEW, the user can choose those values and have them handy, in one place, seeing the changes instantly - without having to jump to various locations.

Enhancements of the new rules editor compared to standard spreadsheets include the following:
The block diagram, where:
   users can group calculations in the way they see them, and
   input and output blocks show clearly where, in terms of the data flow, the calculations start and where they end.
   Values in cells can be of complex data types (e.g. hierarchical).
   Programming constructs that are not available in standard spreadsheets - e.g. CASE, SELECT or LOOP.
   Cell regions to express the aforementioned programing constructs. The regions can be recursively nested.
   Named cells, where the names are displayed in the spreadsheet next to the formulas they describe.

In this specification the words "icon" and "block" are used interchangeably.

## Claims

1. A multi-format editor for creating a software application, said editor being suitable for running on a computing device having at least a processor, a memory, a display device and an input device, and said editor comprising:
a graphical editor for:
retrieving from said memory and displaying on said display device a number of graphical elements; and
enabling a user to select and arrange at least some of said graphical elements on said display device using said input device so as to form a graphical representation of a process to be performed by said software application; and
a textual editor for displaying on said display device a textual representation of computer instructions describing a process to be performed by said software application, and enabling said user to edit said textual representation;
wherein said processor is arranged to automatically maintain said graphical and textual representations synchronised following amendment of said graphical representation in said graphical editor or amendment of said textual representation in said textual editor.

2. A multi-format editor as claimed in claim 1, wherein said graphical editor and said textual editor are arranged side by side.

3. A multi-format editor as claimed in claim 1 or 2, wherein a divider line is displayed between said graphical editor and said textual editor, and wherein said divider line is arranged to be movable by a user to increase or decrease the size of said graphical editor and said textual editor.

4. A multi-format editor as claimed in any preceding claim, which is arranged to allow the position of said graphical editor and said textual editor to be swapped by a user.

5. A multi-format editor as claimed in any preceding claim, wherein said graphical editor is arranged to work with any or all of the following:
Aptitude Control Flow, Rules and Microflows;
Web Application Control Flow;
SQL Procedures;
SQL Rules; and
WYSIWYG Form Designer.

6. A multi-format editor as claimed in any preceding claim, wherein said textual editor is arranged to work with any or all of the following:
Japti;
Java;
Database Stored Procedures;
SQL statements; and
Form Layouts .

7. A multi-format editor as claimed in any preceding claim, which is arranged so that if a user adds an icon to said graphical representation, corresponding code is automatically added to said textual representation, and said corresponding code is automatically highlighted, so that said corresponding code is distinguished from other code in said textual representation.

8. A multi-format editor as claimed in claim 7, wherein said corresponding code is highlighted by highlighting the background of the corresponding code.

9. A multi-format editor as claimed in any preceding claim, which is arranged so that if a user adds code to said textual representation a corresponding code block is added to said graphical representation.

10. A multi-format editor as claimed in any preceding claim, which is arranged so that if a user adds code to said textual representation and said code is unrecognised by the multi-format editor, then a corresponding code block containing said unrecognised code is added to said graphical representation.

11. A multi-format editor as claimed in any preceding claim, wherein said graphical representation may comprise an abstract region representing code that a user has decided not to convert into code blocks in the graphical representation.

12. A method of creating a software application using a multi-format editor running on a computing device having at least a processor, a memory, a display device and an input device, said method comprising:
displaying on said display device a graphical editor;
retrieving from said memory a number of graphical elements and displaying said graphical elements in said graphical editor;
enabling a user to select and arrange in said graphical editor at least some of said graphical elements using said input device so as to form a graphical representation of a process to be performed by said software application;
enabling a user to edit said graphical representation;
displaying on said display device a textual editor;
displaying in said textual editor a textual representation of computer instructions describing a process to be performed by said software application;
enabling said user to edit said textual representation; and
using said processor to automatically maintain said graphical and textual representations synchronised following editing of said graphical representation in said graphical editor or editing of said textual representation in said textual editor.

13. A method as claimed in claim 12, wherein said multi-format editor is a multi-format editor as claimed in any one of claims 1 to 11.

14. A computer-readable medium containing computer-readable instructions for performing a method as claimed in claim 12 or 13.
